# EUROPEAN PATENT SPECIFICATION

(11) **EP 3 757 069 B1**
(45) Date of publication and mention of the grant of the patent: **21.08.2024**
(21) Application number: 19182614.8
(22) Date of filing: 26.06.2019
(51) Int. Cl.: C02F 1/00, B01D 29/35, B01D 35/147, B01D 35/153, B01D 29/96

(54) **WATER FILTER DEVICE**
WASSERFILTERVORRICHTUNG
DISPOSITIF DE FILTRE À EAU

(43) Date of publication of application: 30.12.2020
(73) Proprietor: Pittway Sarl, 1180 Rolle (CH)
(72) Inventor: HALTMAR, Bretislav, 664 57 Menin (CZ)
(74) Representative: Sturm, Christoph

(56) References cited:
- CN-A- 109 139 955
- DE-U1- 202017 104 365
- US-A- 4 951 702
- US-B1- 7 297 265

## Description

The invention relates to a water filter device, especially to a drinking water filter device.

EP 3 360 608 A1 discloses a water filter device. The water filter device known from EP 3 360 608 A1 has a housing. Said housing provides an inlet port for unfiltered water, an outlet port for filtered water, and a flow chamber for the water extending between the inlet port of the housing and the outlet port of the housing. The water filter device known from EP 3 360 608 A1 has further a sieve insert or filter cartridge positioned with the flow chamber of the housing. Said sieve insert or filter cartridge separates the flow chamber in a first sub-chamber for the unfiltered water and a second sub-chamber for the filtered water. The sieve insert or filter cartridge has a basic body providing a sieve mesh or filter mesh. An upper housing section of the housing of the water filter device known from EP 3 360 608 A1 provides the inlet port for unfiltered water and the outlet port for filtered water, while a lower housing section of the housing provides a filter bowl accommodating the sieve insert or filter cartridge.

For replacing an old, used sieve insert or filter cartridge by a new, unused filter cartridge it is necessary for the water filter device known from EP 3 360 608 A1 to remove the lower housing section of the housing that provides the filter bowl together with the sieve insert or filter cartridge from the upper housing section of the housing that provides the inlet port and the outlet port. The lower housing section of the housing that provides the filter bowl contains water. The handling of the filter bowl containing water together with the sieve insert or filter cartridge makes the replacement of sieve insert or filter cartridge complex and unconvenient. Water may splash out of the filter bowl.

CN 109 139 955 A1 discloses a water filter device comprising a housing, said housing providing an inlet port for unfiltered water, an outlet port for filtered water, a flow chamber for the water extending between the inlet port of the housing and the outlet port of the housing. The water filter device further comprising a sieve insert or filter cartridge positioned with the flow chamber of the housing, said sieve insert or filter cartridge separating the flow chamber in a first sub-chamber for the unfiltered water and a second sub-chamber for the filtered water. The sieve insert or filter cartridge has a basic body providing a sieve mesh or filter mesh and a plug body for mounting the sieve insert or filter cartridge within or at the housing. The sieve insert or filter cartridge is mounted within or at the housing through the plug body.

US 7 297 265 B1 discloses a water filter device a water filter device comprising a housing, said housing providing an inlet port for unfiltered water, an outlet port for filtered water, a flow chamber for the water extending between the inlet port of the housing and the outlet port of the housing. The inlet port for unfiltered water and the outlet port for filtered water are both provided at a first, lower end of the housing. The water filter device further comprising a sieve insert or filter cartridge positioned with the flow chamber of the housing, said sieve insert or filter cartridge separating the flow chamber in a first sub-chamber for the unfiltered water and a second sub-chamber for the filtered water. The sieve insert or filter cartridge has a basic body providing a sieve mesh or filter mesh.

DE 20 2017 104 365 U1 and US 4 951 702 A disclose other prior art.

Against this background, a novel water filter device is provided.

The water filter device has a housing. Said housing provides an inlet port for unfiltered water, an outlet port for filtered water, and a flow chamber for the water extending between the inlet port of the housing and the outlet port of the housing.

The water filter device has further a sieve insert or filter cartridge positioned with the flow chamber of the housing. Said sieve insert or filter cartridge separates the flow chamber in a first sub-chamber for the unfiltered water and a second sub-chamber for the filtered water. The sieve insert or filter cartridge has a basic body providing a sieve mesh or filter mesh and a plug body for mounting the sieve insert or filter cartridge at the housing.

The inlet port for unfiltered water and the outlet port for filtered water are both provided at a first, lower end of the housing.

The sieve insert or filter cartridge is mounted within the housing or at the housing through the plug body at a second, upper end of the housing.

The sieve insert or filter cartridge is configured to be mounted within or at the housing and to be removed from the housing at the second, upper end of the housing. When the sieve insert becomes removed from the housing, water being already present in the housing remains within the housing.

A lower housing section of the housing provides the inlet port for unfiltered water and the outlet port for filtered water. An upper housing section of the housing accommodates the sieve insert or filter cartridge. The upper housing section provides a filter bowl like section of the housing. A tube portion of the housing, namely of the lower housing section, extends upwards from the lower housing section, namely from the inlet port, into the upper housing section. The sieve mesh or filter mesh radially surrounds the tube portion such that the tube portion penetrates into the first sub-chamber of the flow chamber for guiding unfiltered water from inlet port through the tube portion into the first sub-chamber of the flow chamber.

The tube portion of the housing accommodates or supports a shut-off valve. The tube portion of the housing or a valve housing of the shut-off valve mounted to the tube portion has at least one opening for unfiltered water allowing the unfiltered water to flow from the tube portion into the first sub-chamber of the flow chamber. The tube portion of the housing or the valve housing of the shut-off valve accommodates a hollow body of the shut-off valve.

The tube portion of the housing accommodates or supports a shut-off valve. The tube portion of the housing or a valve housing of the shut-off valve mounted to the tube portion has at least one opening for unfiltered water allowing the unfiltered water to flow from the tube portion into the first sub-chamber of the flow chamber. The tube portion of the housing or the valve housing of the shut-off valve accommodates a hollow body of the shut-off valve. Said hollow body carries a disk with openings being configured to be rotated relatively to a stationary disc with openings for closing and opening the shut-off valve. When the openings of the discs are overlapping, the shut-off valve is opened. When the openings of the discs are not overlapping, the shut-off valve is closed.

The shut-off valve further comprises a valve stem carrying the hollow body, a pressure relief valve positioned within the valve stem, and a handle attached to the valve stem, the handle is configured to actuate the shut-off valve and the pressure relief valve, namely configured to rotate the hollow body of the shut-off valve together with the disk carried by the hollow body and to translate a valve body of the pressure relief valve.

The water filter device according to the present invention provides an up-side down design of a water filter device compared to the water filter devices known from prior art. For replacing an old, used sieve insert or filter cartridge by a new, unused filter cartridge it is no longer necessary to disassemble the housing. The entire housing remains in its mounted and assembled status.

The housing may be provided as monolithic housing or monobloc housing.

Preferably, the lower housing section of the housing and an upper housing section of the housing are provided by a monolithic housing or by a monobloc housing.

This design of the water filter device is easy and further simplifies the replacement of the sieve insert or of the filter cartridge.

While replacing a sieve insert or filter cartridge, the water being present within the housing remains within the housing. Replacing the sieve insert or filter cartridge is easy and convenient. The risk that water may splash out is reduced.

The outlet port of the housing preferably accommodates a check valve. The check valve will automatically shut down water flow for the replacement of the sieve insert or filter cartridge. The check valve automatically prevents water back flow from the outlet.

According to a preferred embodiment, the handle is attached pivotably to the valve stem. In a first pivoting position of the handle, when the same extends perpendicular or almost perpendicular to the valve stem, the handle can be rotated from a first status within said first pivoting position into a second status within said first pivoting position and vice versa thereby opening and closing said shut-off valve. In the first status within said first pivoting position the shut-off valve is opened. In the second status within said first pivoting position the shut-off valve is closed. In the second status within said first pivoting position of the handle when the shut-off valve is closed, the handle can be pivoted from the first pivoting position into a second pivoting position and vice versa thereby opening and closing said pressure relief valve. In the first status within said first pivoting position of the handle, when the shut-off valve is opened, the handle cannot be pivoted from the first pivoting position into the second pivoting position. This design of the water filter device is easy and further simplifies the replacement of the sieve insert or of the filter cartridge.

The inlet port of the housing and/or the tube portion of the housing may accommodate a pressure reducing valve. This makes it possible to integrate further functionalities into the water filter device.

Preferred developments of the invention are provided by the dependent claims and the description which follows. Exemplary embodiments are explained in more detail on the basis of the drawing, in which:
- Figure 1: shows a perspective view of a water filter device according to a first embodiment of the invention, wherein the water filter device is in an ON position allowing water flow through the same;
- Figure 2: shows a top-view of the water filter device of Figure 1;
- Figure 3: shows a first cross section through the water filter device of Figure 1;
- Figure 4: shows a second cross section through the water filter device of Figure 1;
- Figure 5: shows a perspective view of the water filter device of Figure 1, wherein the water filter device is in an OFF position stopping water flow through the same;
- Figure 6: shows a top-view of the water filter device of Figure 5;
- Figure 7: shows a first cross section through the water filter device of Figure 5;
- Figure 8: shows a second cross section through the water filter device of Figure 5;
- Figure 9: shows a perspective view of the water filter device of Figures 1, 5, wherein the water filter device is in an OFF position stopping water flow through the same, and wherein a pressure relief valve is opened;
- Figure 10: shows a cross section through the water filter device of Figure 9;
- Figure 11: shows the cross section of Figure 9 with a sieve insert or filter insert being removed;
- Figure 12: shows a cross section through the sieve insert or filter insert;
- Figure 13: shows a perspective view of the sieve insert or filter insert;
- Figure 14: shows a perspective view of a basic body of the sieve insert or filter insert;
- Figure 15: shows a perspective view of a plug body of the sieve insert or filter insert;
- Figure 16: shows a perspective view of the housing of the water filter device;
- Figure 17: shows a detail of Figure 16;
- Figure 18: shows a cross section of a water filter device according to a second embodiment of the invention, wherein the water filter device is in an ON position allowing water flow through the same;
- Figure 19: shows a detail of Figure 18;
- Figure 20: shows a cross section of a water filter device according to a third embodiment of the invention, wherein the water filter device is in an ON position allowing water flow through the same.

The present invention relates to a water filter device. Water filter devices for the filtering of drinking water are also often called potable water filters.

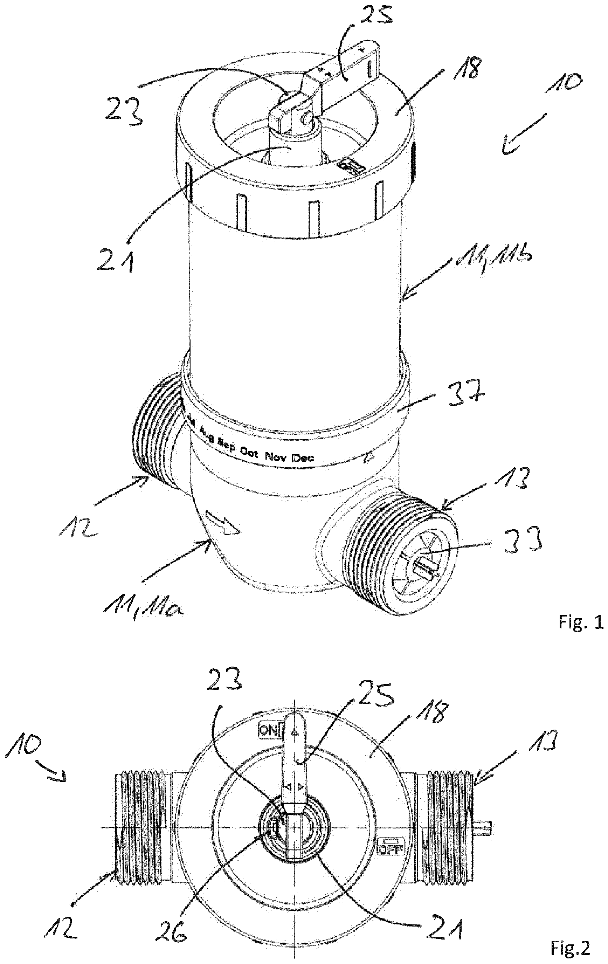

Figures 1 to 17 show details of a potable water filter device 10 according to a first embodiment. The water filter device 10 comprises a housing 11. The housing 11 has a first, lower housing section 11a that provides an inlet port 12 for unfiltered water and an outlet port 13 for filtered water. The housing 11 has a second, upper housing section 11b accommodating a sieve insert or filter cartridge 14. The second, upper housing section 11b provides a filter bowl lilke section of the housing 11.

The housing 11 provides a flow chamber 15 for the water extending between the inlet port 12 of the housing 11 and the outlet port 13 of the housing 11. Said flow chamber 15 is partially provided by the first, lower housing section 11a of the housing 11 and partially provided by the second, upper housing section 11b of the housing 11.

The sieve insert or filter cartridge 14 which is positioned with the flow chamber 15 of the housing 11 separates the flow chamber 15 in a first sub-chamber 15a for the unfiltered water and a second sub-chamber 15b for the filtered water. The sieve insert or filter cartridge 14 has a basic body 16, providing a sieve mesh or filter mesh 17, a plug body 18 for mounting the sieve insert or filter cartridge 14 at the housing 11.

The inlet port 12 for unfiltered water and the outlet port 13 for filtered water are both provided at a first, lower end of the housing 11, namely by the first, lower housing section 11a.

The sieve insert or filter cartridge 14 is mounted within or mounted at the housing 11 through the plug body 18 at a second, upper end of the housing 11, namely at the second, upper housing section 11b.

The sieve insert or filter cartridge 14 is configured to be mounted at the housing 11 and is configured to be removed from the housing 11 at the second, upper end of the housing 11 such that the housing 11 remains completely in its assembled position or status and does not become disassembled for replacing the sieve insert or filter cartridge 14.

Water being already present within the housing 11 remains in the housing 11 while mounting and removal of the sieve insert or filter cartridge 14.

The housing 11 has a tube portion 11c. Said tube portion 11c is part of the lower housing section 11a and extends upwards from the lower housing section 11a, namely from the inlet port 12, into the upper housing section 11b. The sieve mesh or filter mesh17 of the sieve insert or filter cartridge 14 radially surrounds the tube portion 11c such that the tube portion 11c penetrates into the first sub-chamber 15a of the flow chamber 15 to guide unfiltered water from inlet port 12 through the tube portion 11c into the first sub-chamber 15a of the flow chamber 15.

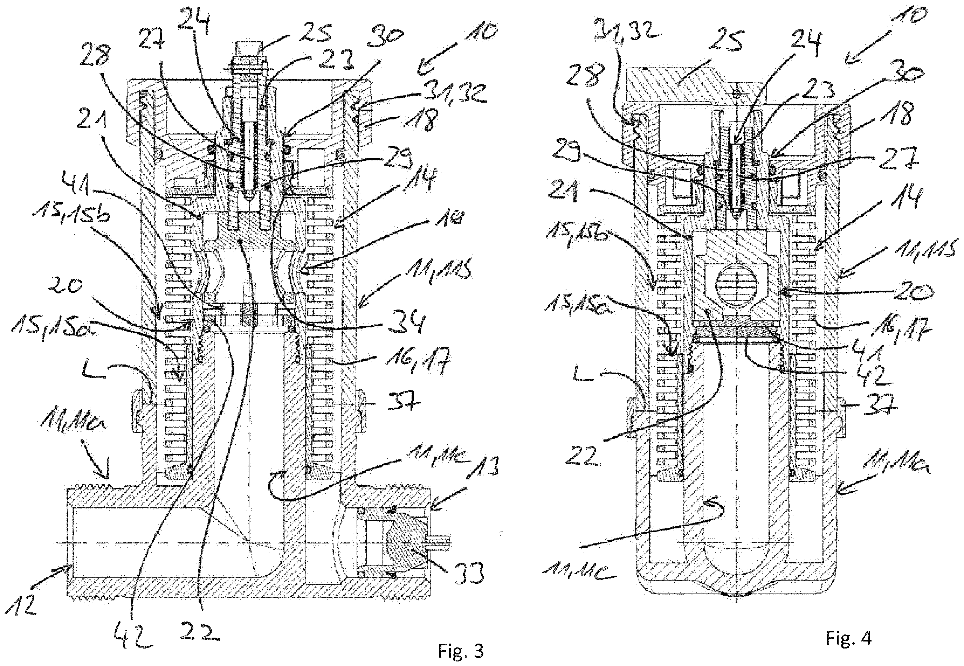

The lower housing section 11a of the housing 11 and an upper housing section 11b of the housing 11 are provided by a monolithic housing or monobloc housing. The line L which is visible in Figures 3, 4, 7, 8, 10, 11, 18, 20 is not a parting line between the lower housing section 11a of the housing 11 and an upper housing section 11b of the housing 11. This line merely indicates that the lower housing section 11a may be made from an opaque plastic material while the upper housing section 11b may be made from a transparent plastic material. Nevertheless, the housing section 11a of the housing 11 and an upper housing section 11b of the housing 11 are provided by one monolithic housing or one monobloc housing especially made by two-component injection molding.

The tube portion 11c of the housing 11 accommodates or supports a shut-off valve 20. In the embodiment shown, the tube portion 11c of the lower housing section 11a supports a shut-off valve 20. A tube-like valve housing 21 of the shut-off valve 20 is mounted to the tube portion 11c. Said valve housing 21 prolongs the tube portion 11c.

The tube portion 11c of the housing 11 or the tube-like valve housing 21 of the shut-off valve 20 has at least one opening 19 for unfiltered water. In the embodiment shown, the valve housing 21 of the shut-off valve 20 has at least one opening 19 for the unfiltered water allowing the unfiltered water to flow from the tube portion 21 into the first sub-chamber 15a of the flow chamber 15.

The tube portion 11c of the housing 11 or the valve housing 21 of the shut-off valve 20 accommodates a hollow body 22of the shut-off valve 20. In the embodiment shown, the valve housing 21 of the shut-off valve 20 accommodates the hollow body 22 of the shut-off valve 20.

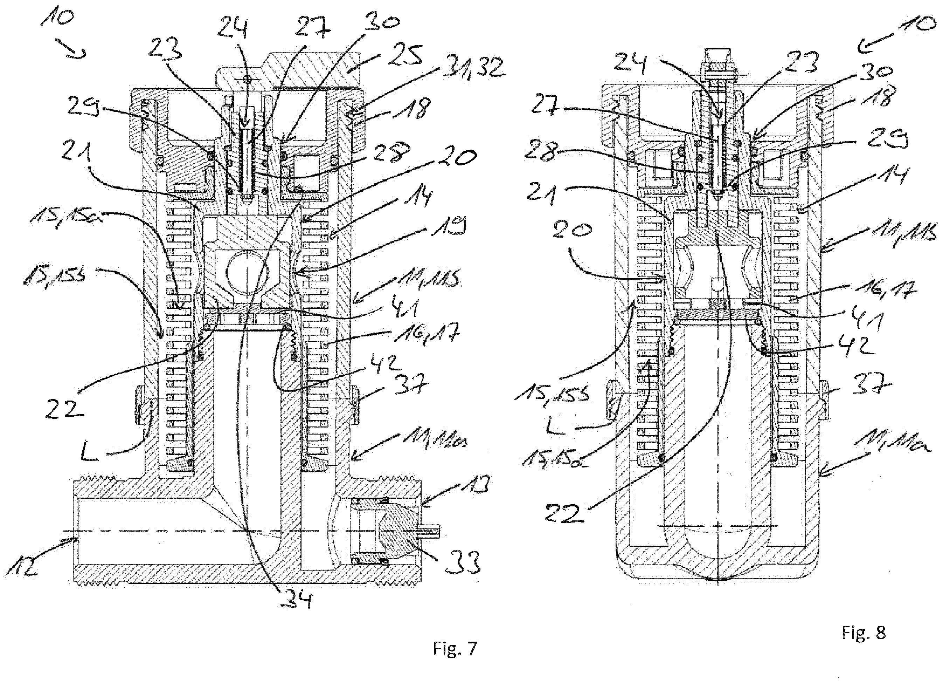

Said hollow body 22 of the shut-off valve 20 carries a disk 41 with openings (not numbered). Said disk 41 carried by the hollow body 22 is configured to be rotated relative to a stationary disc 42 having also openings (not numbered). When the openings of the discs 41, 42 are overlapping (see Figures 3, 18, 20), the shut-off valve 20 is opened. When the openings of the discs 41, 42 are not overlapping (see Figures 7, 10, 11), the shut-off valve 20 is closed.

The shut-off valve 20 comprising the valve housing 21 and hollow body 22 further comprises a valve stem 23 carrying the hollow body 22, a pressure relief valve 24 positioned within the valve stem 23, and a handle 25 attached to the valve stem 23 for actuating the shut-off valve 20 and the pressure relief valve 24. The pressure relief valve 24 is integrated into the valve stem 23.

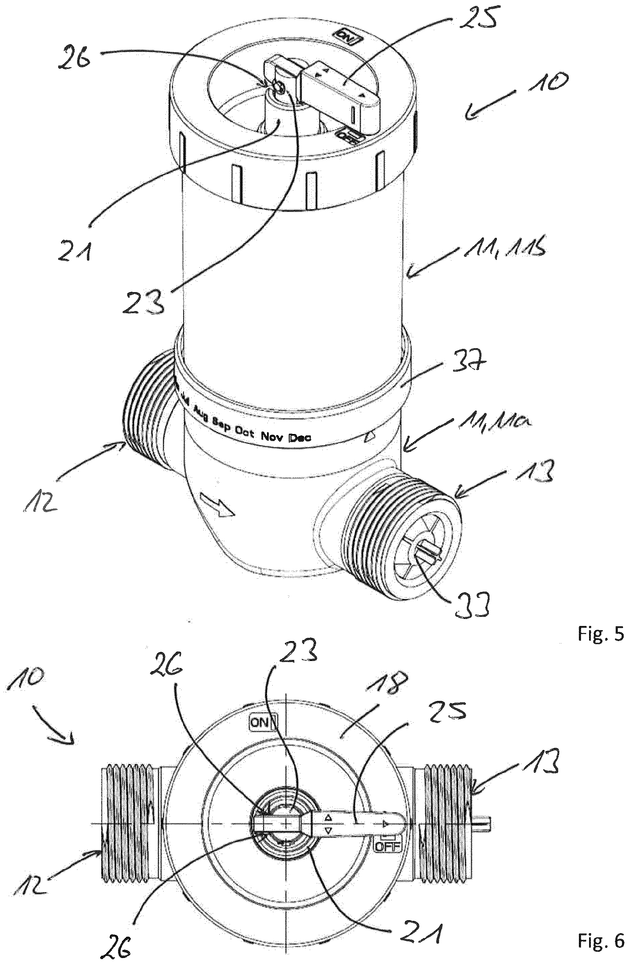

The handle 25 is pivotable attached to the valve stem 23. In a first pivoting position of the handle 25 (See Figures 1-4 and Figures 5-8) the handle 25 extends perpendicular or almost perpendicular to the valve stem 23. In said first pivoting position the handle 25 can be rotated from a first status (See Figures 1-4) within said first pivoting position into a second status (See Figures 5-8) within said first pivoting position and vice versa thereby opening and closing said shut-off valve 20.

When rotating the handle 25 between the first status (See Figures 1-4) and the second status (See Figures 5-8) the valve stem 23 and the hollow body 22 become rotated around a longitudinal axis of the valve stem 23.

Further on, when rotating the handle 25 between the first status (See Figures 1-4) and the second status (See Figures 5-8) the disc 41 carried by the hollow body 22 becomes rotated relative to the stationary disc 42.

In the first status (See Figures 1-4) of the handle 25 within said first pivoting position the openings within the discs 41, 42 are overlapping and therefore unblocked and the shut-off valve 20 is opened. The water filter device is then in an ON position. The plug body 18 of the sieve insert or filter cartridge 14 carries an indicator for said ON position (See Figure 2, 6).

In the second status (See Figures 5-8) of the handle 25 within said first pivoting position the openings within the discs 41, 42 are not overlapping and therfore blocked and the shut-off valve 20 is closed. The water filter device is then in an OFF position. The plug body 18 of the sieve insert or filter cartridge 14 carries also an indicator for said OFF position (See Figure 2, 6).

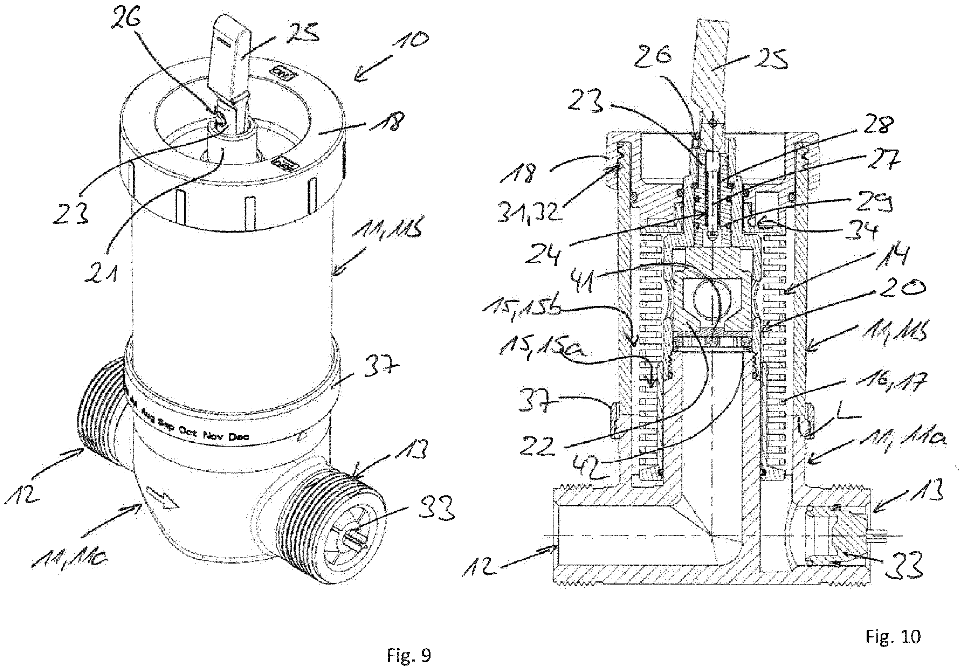

Only in the second status (See Figures 5-8) of the handle 25 within said first pivoting position the handle 25 can be pivoted from the first pivoting position (See Figures 1-4 and Figures 5-8) into a second pivoting position (See Figures 9-11) and vice versa thereby opening and closing said pressure relief valve 24.

In the first status (See Figures 1-4) of the handle 25 within said first pivoting position the handle 25 cannot be pivoted from the first pivoting position into the second pivoting position.

In the second status (See Figures 5-8) of the handle 25 within said first pivoting position a slot 26 provided at an upper end section of the valve housing 21 allows the pivoting of the handle 25 between said first pivoting position and said second pivoting position.

In said second status of the handle 25 within said first pivoting position the slot 26 and the handle 25 are extending parallel and are overlapping thereby allowing the pivoting of the handle 25. In said first status (See Figures 1-4) of the handle 25 within said first pivoting position the slot 26 and the handle 25 are extending perpendicular and are not overlapping thereby not allowing the pivoting of the handle 25.

The pressure relief valve 24 comprises a valve body 27 accommodated with the valve stem 23 of the shut-off valve 20. The pressure relief valve 24 further comprises a spring 28 for closing the pressure relief valve 24. When the handle 25 is in the first pivoting position (See Figures 1-4 and Figures 5-8), the spring 28 closes the pressure relief valve 24 by pressing the valve body 27 against a valve seat 29 provided by the valve stem 23 of the shut-off valve 20.

When the handle 25 is in the second pivoting position (See Figures 9-11), the handle 25 opens the pressure relief valve 24 against the force of the spring 28 by lifting off the valve body 27 from a valve seat 29 provided by the valve stem 23 of the shut-off valve 20. When the pressure relief valve 24 is opened, the pressure being present within the valve housing 21 can be reduced to ambient pressure.

When the handle 25 is in the second pivoting position (See Figures 9-11), the sieve insert or filter cartridge 14 can be removed from the housing 11 by unscrewing the sieve insert or filter cartridge 14 from the upper housing section 11b and thereafter by pulling out the sieve insert or filter cartridge 14 from the housing 11 in linear direction upwards. The handle 25 than passes through an opening 30 of the plug body 18. In the assembled status said opening 30 of the plug body 18 accommodates the upper portion of the valve housing 21 of the shut-off valve 20.

When the water filter device 10 is in use, the same is connected to a water pipe through the inlet port 12 and through the outlet port 13. In use, the water filter device 10 is in the ON position (see Figures 1-4). In the ON position the shut-off valve 20 is opened and the pressure relief valve 24 is closed.

For replacing an old, used sieve insert or filter cartridge 14 by a new, unused filter cartridge, the handle 25 is first rotated from the first status (See Figures 1-4) of the handle 25 within said first pivoting position into the second status (See Figures 5-8) of the handle 25 within said first pivoting position thereby transferring the water filter device 10 in the OFF position (see Figures 5-8). In the OFF position the shut-off valve 20 is closed and the pressure relief valve 24 is still closed. The closed shut-off valve 20 prevents that water flows from the inlet into the flow chamber 15 accommodating the sieve insert or filter cartridge 14.

Afterwards, namely after transferring the water filter device 10 in the OFF position, the handle 25 is pivoted from first pivoting position (see Figures 5-8), namely from the second status within said first pivoting, into the second pivoting position (see Figures 9-10). In said second pivoting position the shut-off valve 20 remains closed and the pressure relief valve 24 is opened providing pressure relief. The pressure relief causes a pressure drop in the flow chamber 15 accommodating the sieve insert or filter cartridge 14. The check valve 33 will then automatically close and prevents water back flow from the outlet.

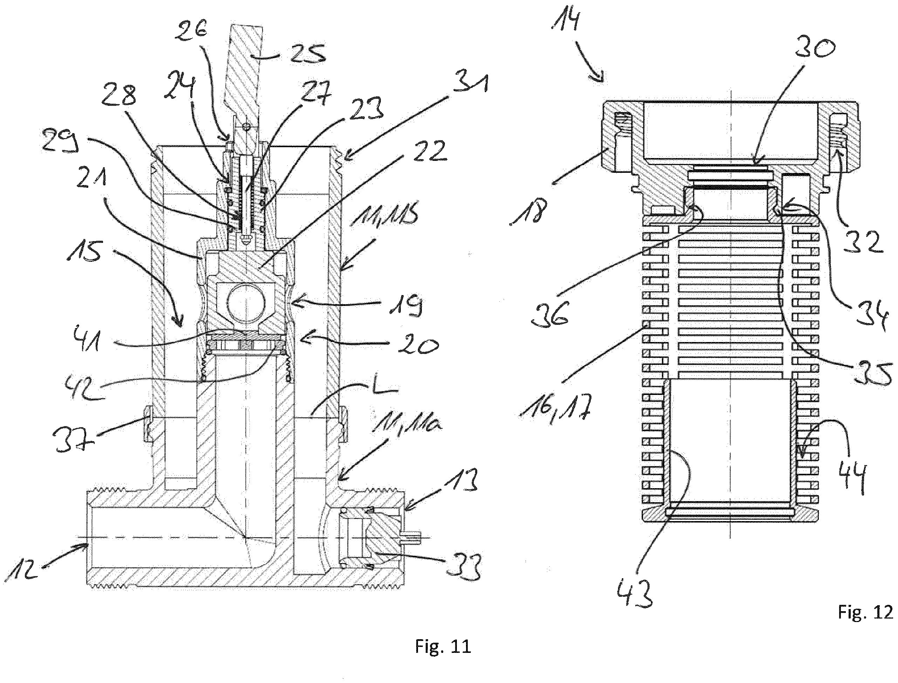

Afterwards, namely after providing the pressure relief, the sieve insert or filter cartridge 14 can be removed from the flow chamber 15 of the housing 11 by unscrewing the plug body 18 of the sieve insert or filter cartridge 14 from the housing 11 and thereafter by pulling the sieve insert or filter cartridge 14 out of the housing 11 (see Figures 11-12). The entire housing 11 remains assembled and therefore in the same status.

When replacing the sieve insert or filter cartridge 14, water being present in the housing 11 remains in the housing 11. Replacing the sieve insert or filter cartridge 14 is easy and convenient. The risk that water may splash out is reduced.

It is not possible to remove or unscrew the plug body 18 before the handle 25 is in second status and second pivot position. It means that the shut off valve 20 is closed and the pressure relief valve 24 opened.

The water filter device has a locking mechanism with an automatic shut off mechanism provided by the shut off valve 20, pressure relief valve 24 and check valve 33. The check valve 33 is preferably positioned with the outlet port 13 of the housing 11. The check valve may also be a separate unit connected to the housing 11 downstream of the outlet port 13.

As can be best seen in Figure 12, the sieve insert or filter cartridge 14, namely the basic body 16 of sieve insert or filter cartridge 14 comprises in a lower section a closed cylindrical wall 43. This wall 43 delimits together with the filter mesh 17 a space 44 for the settlement of sediments. Sediments are settled at the bottom of the filter cartridge 14 within said space and not at the bottom of the housing 11.

The removed or used sieve insert or filter cartridge 14 may be placed in a hygiene bag which is also used to provide a new sieve insert or filter cartridge prior the replacement of the sieve insert or filter cartridge 14.

The outlet port 13 preferably accommodates a check valve 33 to prevent that water follows back from the outlet into the housing 11.

As mentioned above, the plug body 18 of the sieve insert or filter cartridge 14 and the housing 11 are screwed together when the water filter device 10 is assembled.

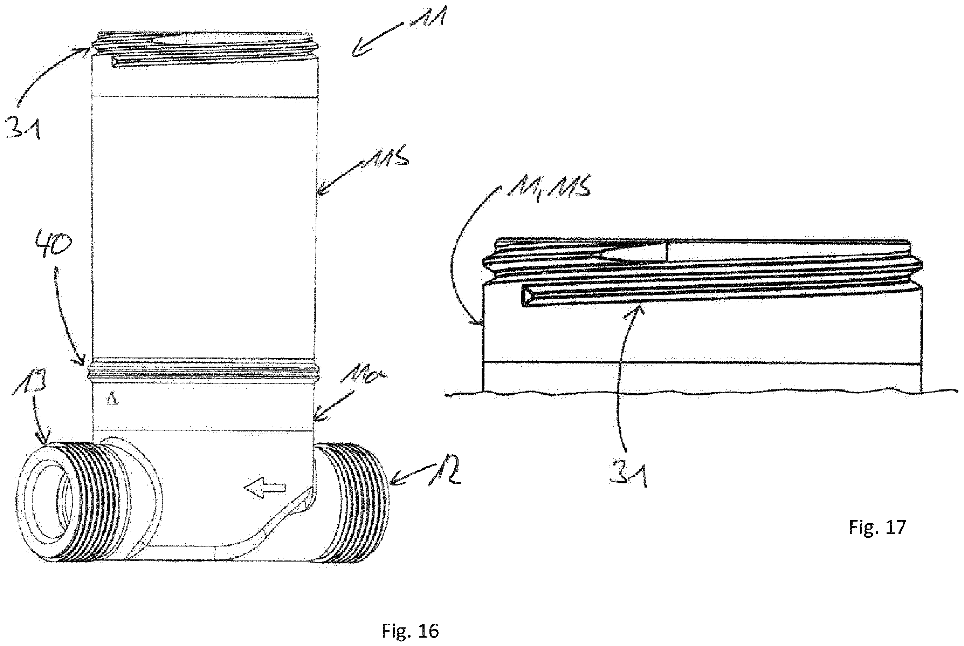

The housing 11 has at the upper end of the upper housing section 11b an outer thread 31 acting together with an inner thread 32 of the plug body 18. Thread ends of these threads 31, 32 are finished with a step-like cut to provide easy release of the plug body 18 without any tools. So, the threads 31, 32 each have a thread run-out provided by the step-like cut (see Figures 16, 17).

It is also possible to provide a 2-way-thread at the plug body 18 of the sieve insert or filter cartridge 14 and at the housing 11 to allow quicker filter cartridge replacement. 2-way-threads allow less turnings by unscrewing the thread by better working load.

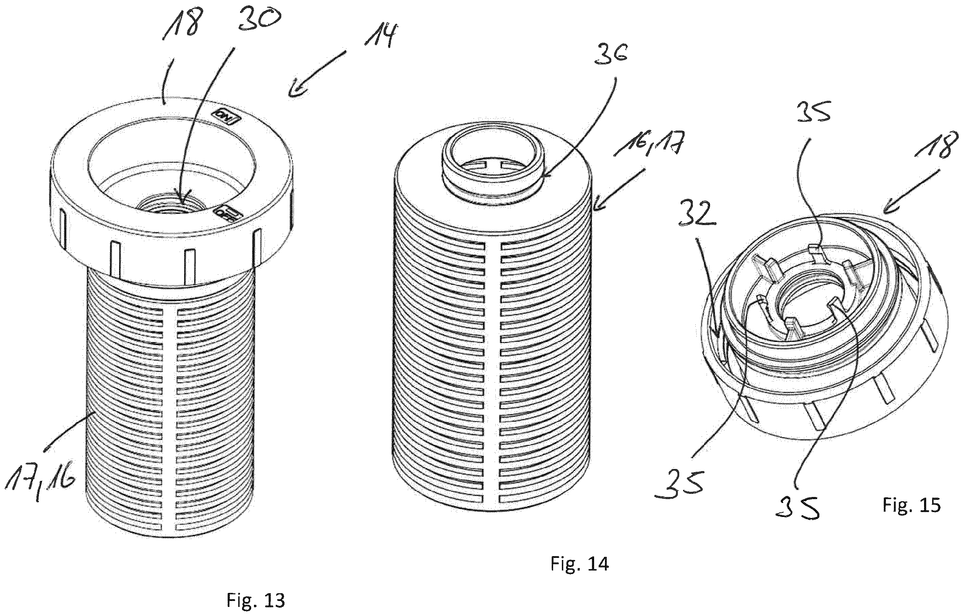

The plug body 18 of sieve insert or filter cartridge 14 is mounted to the basic body 16 of sieve insert or filter cartridge 14 by a snap-fit connection 34. Said snap-fit connection 34 is provided by barb-like protrusions 35 (see Figure 15) of the plug body 18 snapping into a groove 36 (see Figure 14) of the basic body 16.

After the sieve insert or filter cartridge 14 has been removed from the housing 11, it is possible to disassemble the sieve insert or filter cartridge 14 by removing the basic body 16 from the plug body 18. Removing of the basic body 16 is possible by pulling the basic body 16 out of the plug 18. It is then possible to replace the used basic body 16 by a new basic body 16 and to reuse the plug body 18. The new basic body 16 is pushed against the plug body 18. Alternatively, the entire sieve insert or filter cartridge 14 may be replaced.

Figures 1, 3, 4, 5, 7, 8, 9, 10, 11 further show a memory ring 37. Said memory ring 37 becomes turned after replacing a sieve insert or filter cartridge 14 to indicate when the replacement took place or when the next replacement shall be carried out. Figure 16 shows a groove 40 of the housing 11 for guiding the memory ring 37.

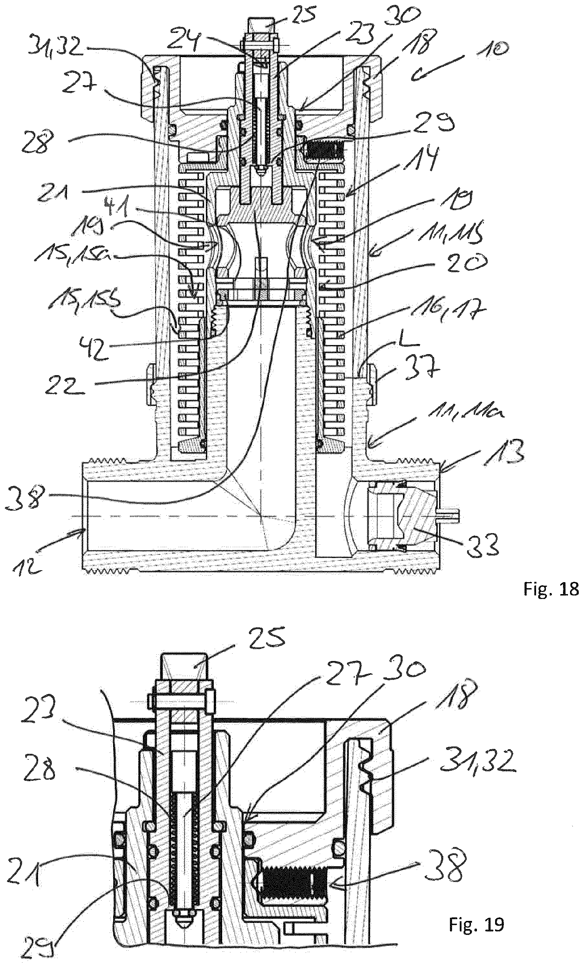

Figure 18 and Figure 19 show details of a potable water filter device 10 according to a second embodiment. To avoid unnecessary repetitions, identical reference numerals have been used for identical parts and reference is made to the above description.

The embodiment of Figures 18 and 19 differs from the embodiment of Figures 1 to 17 only by the features providing the connection between the plug body 18 of sieve insert or filter cartridge 14 and the basic body 16 of sieve insert or filter cartridge 14. In Figures 18, 19 said connection is provided by a spring plunger 38.

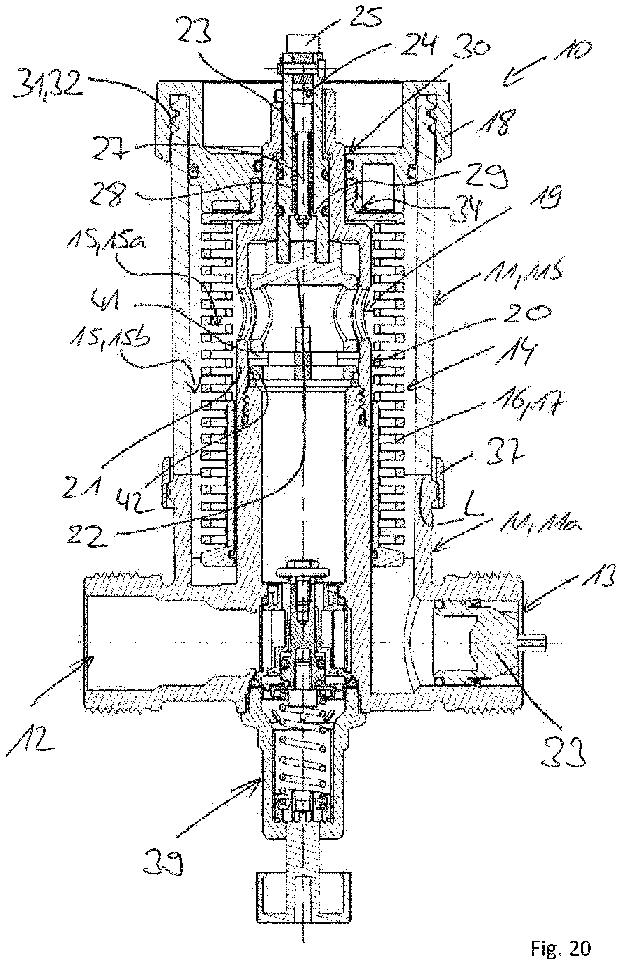

Figure 20 shows details of a potable water filter device 10 according to a third embodiment. To avoid unnecessary repetitions, again identical reference numerals have been used for identical parts and reference is made to the above description.

The embodiment of Figure 20 differs from the embodiment of Figures 1 to 17 only by the additional use of a pressure reducing valve 39. The pressure reducing valve 39 is accommodated in inlet port 12 of the housing 11 and the tube portion 11c of the hosuing11. The pressure reducing valve 39 limits the water pressure being present downstream of the pressure reducing valve 39.

### List of reference signs

- 10: water filter device
- 11: housing
- 11a: lower housing section
- 11b: upper housing section
- 11c: tube portion
- 12: inlet port
- 13: outlet port
- 14: sieve insert or filter cartridge
- 15: flow chamber
- 15a: first sub-chamber
- 15b: second sub-chamber
- 16: basic body
- 17: filter mesh
- 18: plug body
- 19: opening
- 20: shut-off valve
- 21: valve housing
- 22: hollow body
- 23: valve stem
- 24: pressure relief valve
- 25: handle
- 26: slot
- 27: valve body
- 28: spring
- 29: valve seat
- 30: opening
- 31: outer tread
- 32: inner tread
- 33: check valve
- 34: snap-fit connection
- 35: protrusions
- 36: groove
- 37: memory ring
- 38: spring plunger
- 39: pressure reducing valve
- 40: groove
- 41: disc
- 42: disc
- 43: wall
- 44: space

## Claims

1. Water filter device (10), comprising:
a housing (11) having a lower housing section (11a) and an upper housing section (11b),
said housing (11) providing an inlet port (12) for unfiltered water and an outlet port (13) for filtered water, wherein the inlet port (12) for unfiltered water and the outlet port (13) for filtered water are both provided by the lower housing section (11a) of the housing (11),
said housing (11) providing a flow chamber (15) for the water extending between the inlet port (12) of the housing (11) and the outlet port (13) of the housing (11);
wherein a tube portion (11c) of the housing (11), namely of the lower housing section (11a), extends upwards from the lower housing section (11a), namely from the inlet port (12), into the upper housing section (11b),
a sieve insert or filter cartridge (14) positioned with the flow chamber (15) of the housing (11), wherein said sieve insert or filter cartridge (14) is accommodated in the upper housing section (11b) of the housing (11), and wherein said sieve insert or filter cartridge (14) separating the flow chamber (15) in a first sub-chamber (15a) for the unfiltered water and a second sub-chamber (15b) for the filtered water, the sieve insert or filter cartridge (14) having
a basic body (16) providing a sieve mesh or filter mesh (17), wherein the sieve mesh or filter mesh (17) radially surrounds the tube portion (11c) such that the tube portion (11c) penetrates into the first sub-chamber (15a) of the flow chamber (15) for guiding unfiltered water from inlet port (12) through the tube portion (11c) into the first sub-chamber (15a) of the flow chamber (15),
a plug body (18) for mounting the sieve insert or filter cartridge (14) within or at the housing (11);
wherein the sieve insert or filter cartridge (14) is mounted within or at the housing through the plug body (18) at a second, upper end of the housing (11),
wherein the sieve insert or filter cartridge (14) is configured to be mounted within or at the housing (11) and to be removed from the housing (11) at the second, upper end of the housing (11),
wherein the tube portion (11c) of the housing (11) accommodates or supports a shut-off valve (20), the tube portion (11c) of the housing (11) or the valve housing (21) of the shut-off valve (20) accommodating a hollow body (22) of the shut-off valve (20), said hollow body (22) carrying a disk (41) being configured to be rotated relative to a stationary disc (42) for closing and opening the shut-off valve (20)
wherein the shut-off valve (20) further comprises
a valve stem (23) carrying the hollow body (22),
a pressure relief valve (24) positioned within the valve stem (23),
a handle (25) attached to the valve stem (23), the handle (25) is configured to actuate the shut-off valve (20) and the pressure relief valve (24), namely configured to rotate the hollow body (22) of the shut-off valve (20) together with the disk (41) carried by the hollow body (22) and to translate a valve body (27) of the pressure relief valve (24).

2. Water filter device as claimed in claim 1, **characterized in that**
the tube portion (11c) of the housing (11) or a valve housing (21) of the shut-off valve (20) mounted to the tube portion (21) has at least one opening (19) for unfiltered water allowing the unfiltered water to flow from the tube portion (11c) into the first sub-chamber (15a) of the flow chamber (15).

3. Water filter device as claimed in claim 1 or 2, **characterized in that** the
the handle (25) is attached pivotably to the valve stem (23),
in a first pivoting position of the handle (25), when the same extends perpendicular or almost perpendicular to the valve stem (23), the handle (25) is configured to be rotated from a first status within said first pivoting position into a second status within said first pivoting position and vice versa for opening and closing said shut-off valve (20),
in the second status within said first pivoting position of the handle (25) the handle (25) is configured to be pivoted from the first pivoting position into a second pivoting position and vice versa for opening and closing said pressure relief valve (24).

4. Water filter device as claimed in claim 3, **characterized in that**
in the first status within said first pivoting position of the handle (25) the handle (25) cannot be pivoted from the first pivoting position into the second pivoting position.

5. Water filter device as claimed in one of claims 1 to 4, **characterized in that**
the pressure relief valve (24) is integrated into the valve stem (23) of the shut-off valve (20).

6. Water filter device as claimed in one of claims 1 to 5, **characterized in that**
the a valve body (27) of pressure relief valve (24) is accommodated with the valve stem (23) of the shut-off valve (20),
the pressure relief valve (24) comprises a spring (28) for acting on the valve body (27) of the pressure relief valve (24), namely for closing the pressure relief valve (24).

7. Water filter device as claimed in one of claims 1 to 6, **characterized in that**
the lower housing section (11a) of the housing (11) and the upper housing section (11b) of the housing (11) are provided by a monolithic housing or a monobloc housing.

8. Water filter device as claimed in one of claims 1 to 7, **characterized in that**
the plug body (18) of sieve insert or filter cartridge (14) is mounted to the basic body (16) of sieve insert or filter cartridge (14) by a snap-fit connection (34).

9. Water filter device as claimed in one of claims 1 to 8, **characterized in that**
the plug body (18) of sieve insert or filter cartridge (14) is mounted to the basic body (16) of sieve insert or filter cartridge (14) by a spring plunger (38).

10. Water filter device as claimed in one of claims 1 to 9, **characterized in that**
the outlet port (13) of the housing (11) accommodates a check valve (33).

11. Water filter device as claimed in one of claims 1 to 10, **characterized in that**
the inlet port (12) of the housing (11) and/or the tube portion (11c) of the housing (11) accommodates a pressure reducing valve (39).

## Patentansprüche

1. Wasserfiltervorrichtung (10), umfassend:
ein Gehäuse (11) mit einem unteren Gehäuseabschnitt (11a) und einem oberen Gehäuseabschnitt (11b),
wobei das Gehäuse (11) eine Einlassöffnung (12) für ungefiltertes Wasser und eine Auslassöffnung (13) für gefiltertes Wasser bereitstellt, wobei die Einlassöffnung (12) für ungefiltertes Wasser und die Auslassöffnung (13) für gefiltertes Wasser beide durch den unteren Gehäuseabschnitt (11a) des Gehäuses (11) bereitgestellt werden,
wobei das Gehäuse (11) eine Strömungskammer (15) für das Wasser bereitstellt, die sich zwischen der Einlassöffnung (12) des Gehäuses (11) und der Auslassöffnung (13) des Gehäuses (11) erstreckt;
wobei sich ein Rohrabschnitt (11c) des Gehäuses (11), nämlich des unteren Gehäuseabschnitts (11a), vom unteren Gehäuseabschnitt (11a), nämlich von der Einlassöffnung (12), nach oben in den oberen Gehäuseabschnitt (11b) erstreckt,
einen Siebeinsatz oder eine Filterpatrone (14), der bzw. die mit der Strömungskammer (15) des Gehäuses (11) angeordnet ist, wobei der Siebeinsatz oder die Filterpatrone (14) im oberen Gehäuseabschnitt (11b) des Gehäuses (11) aufgenommen ist, und wobei der Siebeinsatz oder die Filterpatrone (14) die Strömungskammer (15) in eine erste Teilkammer (15a) für das ungefilterte Wasser und eine zweite Teilkammer (15b) für das gefilterte Wasser trennt, wobei der Siebeinsatz oder die Filterpatrone (14) folgende Elemente aufweist:
einen Grundkörper (16), der ein Siebnetz oder ein Filternetz (17) bereitstellt, wobei das Siebnetz oder das Filternetz (17) den Rohrabschnitt (11c) radial umgibt, derart, dass der Rohrabschnitt (11c) in die erste Teilkammer (15a) der Strömungskammer (15) zum Leiten von ungefiltertem Wasser von der Einlassöffnung (12) durch den Rohrabschnitt (11c) in die erste Teilkammer (15a) der Strömungskammer (15) eindringt,
einen Steckkörper (18) zum Montieren des Siebeinsatzes oder der Filterpatrone (14) im oder am Gehäuse (11);
wobei der Siebeinsatz oder die Filterpatrone (14) im oder am Gehäuse durch den Steckkörper (18) an einem zweiten, oberen Ende des Gehäuses (11) montiert ist,
wobei der Siebeinsatz oder die Filterpatrone (14) dafür ausgelegt ist, im oder am Gehäuse (11) montiert und am zweiten, oberen Ende des Gehäuses (11) aus dem Gehäuse (11) entfernt zu werden,
wobei der Rohrabschnitt (11c) des Gehäuses (11) ein Absperrventil (20) aufnimmt oder trägt, wobei der Rohrabschnitt (11c) des Gehäuses (11) oder das Ventilgehäuse (21) des Absperrventils (20) einen Hohlkörper (22) des Absperrventils (20) aufnimmt, wobei der Hohlkörper (22) eine Scheibe (41) trägt, die dafür ausgelegt ist, relativ zu einer stationären Scheibe (42) zum Schließen und Öffnen des Absperrventils (20) gedreht zu werden,
wobei das Absperrventil (20) ferner folgende Elemente umfasst:
einem Ventilschaft (23), der den Hohlkörper (22) trägt,
ein Druckbegrenzungsventil (24), das innerhalb des Ventilschafts (23) angeordnet ist,
einen Griff (25), der am Ventilschaft (23) befestigt ist, wobei der Griff (25) dafür ausgelegt ist, das Absperrventil (20) und das Druckbegrenzungsventil (24) zu betätigen, nämlich so ausgelegt ist, dass er den Hohlkörper (22) des Absperrventils (20) zusammen mit der vom Hohlkörper (22) getragenen Scheibe (41) dreht und einen Ventilkörper (27) des Druckbegrenzungsventils (24) verschiebt.

2. Wasserfiltervorrichtung nach Anspruch 1, **dadurch gekennzeichnet, dass**
der Rohrabschnitt (11c) des Gehäuses (11) oder ein Ventilgehäuse (21) des Absperrventils (20), das am Rohrabschnitt (21) montiert ist, mindestens eine Öffnung (19) für ungefiltertes Wasser aufweist, die es dem ungefilterten Wasser ermöglicht, vom Rohrabschnitt (11c) in die erste Teilkammer (15a) der Strömungskammer (15) zu fließen.

3. Wasserfiltervorrichtung nach Anspruch 1 oder 2, **dadurch gekennzeichnet, dass**
der Griff (25) schwenkbar am Ventilschaft (23) befestigt ist,
in einer ersten Schwenkposition des Griffs (25), wenn sich dieser senkrecht oder nahezu senkrecht zum Ventilschaft (23) erstreckt, der Griff (25) dafür ausgelegt ist, von einem ersten Zustand innerhalb der ersten Schwenkposition in einen zweiten Zustand innerhalb der ersten Schwenkposition und umgekehrt zum Öffnen und Schließen des Absperrventils (20) gedreht zu werden,
im zweiten Zustand innerhalb der ersten Schwenkposition des Griffs (25) der Griff (25) dafür ausgelegt ist, von der ersten Schwenkposition in eine zweite Schwenkposition und umgekehrt zum Öffnen und Schließen des Druckbegrenzungsventils (24) geschwenkt zu werden.

4. Wasserfiltervorrichtung nach Anspruch 3, **dadurch gekennzeichnet, dass**
im ersten Zustand innerhalb der ersten Schwenkposition des Griffs (25) der Griff (25) nicht von der ersten Schwenkposition in die zweite Schwenkposition geschwenkt werden kann.

5. Wasserfiltervorrichtung nach einem der Ansprüche 1 bis 4, **dadurch gekennzeichnet, dass**
das Druckbegrenzungsventil (24) in den Ventilschaft (23) des Absperrventils (20) integriert ist.

6. Wasserfiltervorrichtung nach einem der Ansprüche 1 bis 5, **dadurch gekennzeichnet, dass**
der Ventilkörper (27) des Druckbegrenzungsventils (24) mit dem Ventilschaft (23) des Absperrventils (20) aufgenommen ist,
das Druckbegrenzungsventil (24) eine Feder (28) zum Einwirken auf den Ventilkörper (27) des Druckbegrenzungsventils (24), nämlich zum Schließen des Druckbegrenzungsventils (24), umfasst.

7. Wasserfiltervorrichtung nach einem der Ansprüche 1 bis 6, **dadurch gekennzeichnet, dass**
der untere Gehäuseabschnitt (11a) des Gehäuses (11) und der obere Gehäuseabschnitt (11b) des Gehäuses (11) durch ein monolithisches Gehäuse oder ein Monoblockgehäuse bereitgestellt sind.

8. Wasserfiltervorrichtung nach einem der Ansprüche 1 bis 7, **dadurch gekennzeichnet, dass**
der Steckkörper (18) des Siebeinsatzes oder der Filterpatrone (14) mit dem Grundkörper (16) des Siebeinsatzes oder der Filterpatrone (14) durch eine Schnappverbindung (34) montiert ist.

9. Wasserfiltervorrichtung nach einem der Ansprüche 1 bis 8, **dadurch gekennzeichnet, dass**
der Steckkörper (18) des Siebeinsatzes oder der Filterpatrone (14) mit dem Grundkörper (16) des Siebeinsatzes oder der Filterpatrone (14) durch einen Federstößel (38) montiert ist.

10. Wasserfiltervorrichtung nach einem der Ansprüche 1 bis 9, **dadurch gekennzeichnet, dass**
die Auslassöffnung (13) des Gehäuses (11) ein Rückschlagventil (33) aufnimmt.

11. Wasserfiltervorrichtung nach einem der Ansprüche 1 bis 10, **dadurch gekennzeichnet, dass**
die Einlassöffnung (12) des Gehäuses (11) und/oder der Rohrabschnitt (11c) des Gehäuses (11) ein Druckminderventil (39) aufnimmt.

## Revendications

1. Dispositif de filtre à eau (10), comprenant :
un boîtier (11) ayant une section inférieure de boîtier (11a) et une section supérieure de boîtier (11b),
ledit boîtier (11) fournissant un orifice d'entrée (12) pour de l'eau non filtrée et un orifice de sortie (13) pour de l'eau filtrée, dans lequel l'orifice d'entrée (12) pour de l'eau non filtrée et l'orifice de sortie (13) pour de l'eau filtrée sont tous les deux fournis par la section inférieure de boîtier (11a) du boîtier (11),
ledit boîtier (11) fournissant une chambre d'écoulement (15) pour l'eau, s'étendant entre l'orifice d'entrée (12) du boîtier (11) et l'orifice de sortie (13) du boîtier (11) ;
dans lequel une partie tubulaire (11c) du boîtier (11), à savoir de la section inférieure de boîtier (11a), s'étend vers le haut depuis la section inférieure de boîtier (11a), à savoir depuis l'orifice d'entrée (12), jusque dans la section supérieure de boîtier (11b),
une garniture en tamis ou cartouche de filtre (14) positionnée avec la chambre d'écoulement (15) du boîtier (11), dans lequel ladite garniture en tamis ou cartouche de filtre (14) est logée dans la section supérieure de boîtier (11b) du boîtier (11), et dans lequel ladite garniture en tamis ou cartouche de filtre (14) sépare la chambre d'écoulement (15) en une première sous-chambre (15a) pour l'eau non filtrée et une seconde sous-chambre (15b) pour l'eau filtrée, la garniture en tamis ou cartouche de filtre (14) ayant
un corps de base (16) fournissant une toile de tamis ou toile de filtre (17), dans lequel la toile de tamis ou toile de filtre (17) entoure radialement la partie tubulaire (11c) de telle sorte que la partie tubulaire (11c) pénètre dans la première sous-chambre (15a) de la chambre d'écoulement (15) pour guider de l'eau non filtrée depuis l'orifice d'entrée (12), à travers la partie tubulaire (11c), jusque dans la première sous-chambre (15a) de la chambre d'écoulement (15),
un corps bouchon (18) pour monter la garniture en tamis ou cartouche de filtre (14) à l'intérieur ou au niveau du boîtier (11) ;
dans lequel la garniture en tamis ou cartouche de filtre (14) est montée à l'intérieur ou au niveau du boîtier à travers le corps bouchon (18) à une seconde extrémité supérieure du boîtier (11),
dans lequel la garniture en tamis ou cartouche de filtre (14) est configurée pour être montée à l'intérieur ou au niveau du boîtier (11) et pour être enlevée du boîtier (11) à la seconde extrémité supérieure du boîtier (11),
dans lequel la partie tubulaire (11c) du boîtier (11) loge ou supporte une soupape d'arrêt (20), la partie tubulaire (11c) du boîtier (11) ou le boîtier de soupape (21) de la soupape d'arrêt (20) logeant un corps creux (22) de la soupape d'arrêt (20), ledit corps creux (22) portant un disque (41) configuré pour être tourné relativement à un disque stationnaire (42) pour fermer et ouvrir la soupape d'arrêt (20),
dans lequel la soupape d'arrêt (20) comprend en outre
une tige de soupape (23) portant le corps creux (22),
une soupape de détente de pression (24) positionnée à l'intérieur de la tige de soupape (23),
une poignée (25) attachée à la tige de soupape (23), la poignée (25) étant configurée pour actionner la soupape d'arrêt (20) et la soupape de détente de pression (24), à savoir configurée pour faire tourner le corps creux (22) de la soupape d'arrêt (20) conjointement avec le disque (41) porté par le corps creux (22) et pour translater un corps de soupape (27) de la soupape de détente de pression (24).

2. Dispositif de filtre à eau tel que revendiqué dans la revendication 1, **caractérisé en ce que**
la partie tubulaire (11c) du boîtier (11) ou un boîtier de valve (21) de la soupape d'arrêt (20) montée sur la partie tubulaire (21) a au moins une ouverture (19) pour de l'eau non filtrée permettant à de l'eau non filtrée de s'écouler depuis la partie tubulaire (11c) jusque dans la première sous-chambre (15a) de la chambre d'écoulement (15).

3. Dispositif de filtre à eau tel que revendiqué dans la revendication 1 ou 2, **caractérisé en ce que**
la poignée (25) est attachée de façon pivotante à la tige de soupape (23),
dans une première position de pivotement de la poignée (25), lorsque cette dernière s'étend perpendiculairement ou presque perpendiculairement à la tige de soupape (23), la poignée (25) est configurée pour être tournée depuis un premier état au sein de ladite première position de pivotement jusque dans un second état au sein de ladite première position de pivotement et vice versa pour ouvrir et fermer ladite soupape d'arrêt (20),
dans le second état au sein de ladite première position de pivotement de la poignée (25), la poignée (25) est configurée pour être mise en pivotement depuis la première position de pivotement jusque dans une seconde position de pivotement et vice versa pour ouvrir et fermer ladite soupape de détente de pression (24).

4. Dispositif de filtre à eau tel que revendiqué dans la revendication 3, **caractérisé en ce que**
dans le premier état au sein de ladite première position de pivotement de la poignée (25), la poignée (25) ne peut pas être mise en pivotement depuis la première position de pivotement jusque dans la seconde position de pivotement.

5. Dispositif de filtre à eau tel que revendiqué dans l'une des revendications 1 à 4, **caractérisé en ce que**
la soupape de détente de pression (24) est intégrée dans la tige de soupape (23) de la soupape d'arrêt (20).

6. Dispositif de filtre à eau tel que revendiqué dans l'une des revendications 1 à 5, **caractérisé en ce que**
la tige de soupape (23) de la soupape d'arrêt (20) est logée dans le corps de soupape (27) de la soupape de détente de pression (24),
la soupape de détente de pression (24) comprend un ressort (28) pour agir sur le corps de soupape (27) de la soupape de détente de pression (24), à savoir pour fermer la soupape de détente de pression (24).

7. Dispositif de filtre à eau tel que revendiqué dans l'une des revendications 1 à 6, **caractérisé en ce que**
la section inférieure de boîtier (11a) du boîtier (11) et la section supérieure de boîtier (11b) du boîtier (11) sont fournies par un boîtier monolithique ou un boîtier monobloc.

8. Dispositif de filtre à eau tel que revendiqué dans l'une des revendications 1 à 7, **caractérisé en ce que**
le corps bouchon (18) de la garniture en tamis ou cartouche de filtre (14) est monté sur le corps de base (16) de la garniture en tamis ou cartouche de filtre (14) par une liaison à ajustement par encliquetage (34).

9. Dispositif de filtre à eau tel que revendiqué dans l'une des revendications 1 à 8, **caractérisé en ce que**
le corps bouchon (18) de la garniture en tamis ou cartouche de filtre (14) est monté sur le corps de base (16) de la garniture en tamis ou cartouche de filtre (14) par un ressort plongeur (38).

10. Dispositif de filtre à eau tel que revendiqué dans l'une des revendications 1 à 9, **caractérisé en ce que**
l'orifice de sortie (13) du boîtier (11) loge une soupape de non-retour (33).

11. Dispositif de filtre à eau tel que revendiqué dans l'une des revendications 1 à 10, **caractérisé en ce que**
l'orifice d'entrée (12) du boîtier (11) et/ou la partie tubulaire (11c) du boîtier (11) logent une soupape de réduction de pression (39).
